# EUROPEAN PATENT SPECIFICATION

(11) **EP 0 428 093 B1**
(45) Date of publication and mention of the grant of the patent: **18.01.1995**
(21) Application number: 90121588.9
(22) Date of filing: 12.11.1990
(51) Int. Cl.: G21C 3/32

(54) **Fuel assembly for a boiling nuclear reactor**
Kernbrennstoffbündel für einen Siedewasserreaktor
Assemblage combustible pour réacteur nucléaire à eau bouillante

(30) Priority: 14.11.1989 SE 8903817
(43) Date of publication of application: 22.05.1991
(73) Proprietor: ABB ATOM AB, S-721 83 Västeras (SE)
(72) Inventor: Nylund, Olov, S-720 17 Västeras (SE)
(74) Representative: Boecker, Joachim, Dr.-Ing.

(56) References cited:
- US-A- 4 749 543
- US-A- 4 749 544

## Description

The invention relates to a fuel assembly for a boiling nuclear reactor according to the precharacterising part of claim 1.

In such a fuel assembly a coolant, for example water, is adapted to flow from below upwards through the fuel assembly, which normally is arranged vertically , to cool, upon a nuclear reaction, the fuel rods arranged in the fuel assembly.

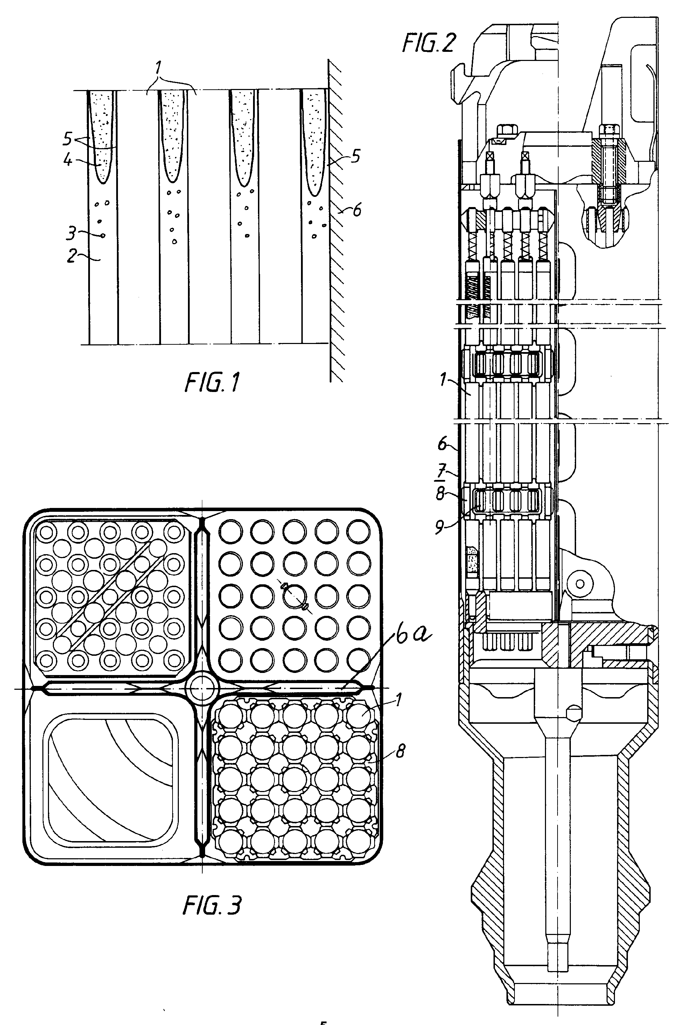

In a boiling type nuclear reactor the steam formation in the fuel assembly increases more and more towards the upper part of the fuel assembly. This is clear from Figure 1 which shows, in rough outline, part of a vertical cross section of a conventional fuel assembly. In Figure 1, numeral 1 designates fuel rods and numeral 2 the spaces between the rods. These spaces 2 are in the lower part of the fuel assembly, which correspond to the lower part of the reactor, filled with coolant, in the present case water. Further up in the fuel assembly, steam bubbles 3 are formed in the water which, still further up in the region 4, are transformed into water steam. As long as so-called dry out does not take place, however, there is always a film 5 of the cooling water on the fuel rods. It is important that this film 5 is maintained at all points of the rods 1. If at some point it disappears by dry out, serious damage at this point of the fuel rod 1 will rapidly occur.

The wall 6 of the fuel assembly is also normally coated with a water film 5. However, this film 5 is not entirely necessary since the wall 6 of the fuel assembly is considerably more insensitive to superheating than the fuel rods. This fact has been observed and attempts have been made to utilize it in some known designs, as, for example, in US-A-4,749,543, column 8 and figure 9. In these designs, the cooling water flowing along the wall 6 of the fuel assembly is diverted towards the centre of the bundle by means of elevations on the wall 6 or recesses in the same. Also fins on the downstream side of the spacers are used to achieve a diversion or deflection of the cooling water. All these embodiments have certain drawbacks. Thus, for example, the elevations increase the pressure drop in the cooling water and thus reduce the cooling effect whereas recesses in the wall entail certain difficulties from the point of view of manufacturing technique. Further, a deflection of the cooling water flowing along the fuel assembly wall 6 should take place as early as possible in relation to each separate spacer, but preferably not immediately after the spacer viewed in the direction of flow. This is due to the fact that dry outs normally occur immediately upstream of a spacer or possibly in the same.

The invention aims at developing a fuel assembly for a boiling nuclear reactor of the above-mentioned kind which enables in a spacer known, for example, from SE-B-8601982-5 (EP-A-87 10 6066), the described deflection of the coolant in a simple manner.

To achieve this aim the invention suggests a fuel assembly for a boiling nuclear reactor according to the introductory part of claim 1, which is characterized by the features of the characterizing part of claim 1.

Further developments of the invention are characterized by the features of the additional claims.

The invention will now be described in greater detail with reference to the accompanying drawings showing in
- Figure 1: part of a vertical cross section of a conventional fuel assembly to demonstrate the above-explained phenomenon dealt with by the invention,
- Figure 2: a fuel assembly for four separate bundles of fuel rods in vertical cross section,
- Figure 3: a horizontal cross section through the assembly shown in Figure 2,
- Figure 4: schematically one of the spacers, shown in Figure 2, seen from the side but provided with fins according to the invention,
- Figure 5: is a section taken along A-A in Figure 4,
- Figures 6 and 7: show an additional embodiment of a finned spacer according to the invention.

Figure 2 shows a fuel assembly 7 in the form of an elongated multi-corner channel with a wall 6. The fuel assembly is divided by inner walls 6a into four sub-channels, each sub-channel accommodating a sub-bundle of fuel rods. Each sub-channel of the fuel assembly 7 accommodates spacers 8 with windows 10 of a known type. In Figure 3 one of the fuel rod sub-bundles is provided with one of the same spacers 8 seen from above. The same arrangement may, of course, be used where the fuel assembly 7 only comprises, for example, one single bundle and thus is not divided into four sections as the fuel assembly shown in Figures 2 and 3.

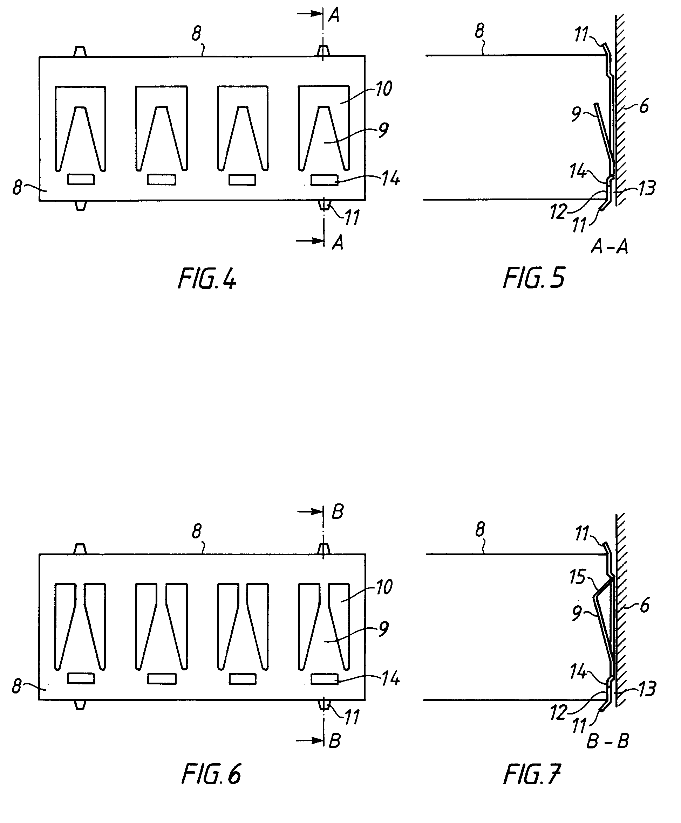

Figure 4 schematically shows a spacer 8 provided with deflection fins 9 in the windows 10. To be able easily to insert a bundle of fuel rods with spacers into the fuel assembly 7 or a sub-channel thereof, each spacer 8 is provided with guide studs 11 which, however, are too small to have any guiding effect on the coolant flowing past.

The frame of the spacer 8 consists of a metal band of, for example, Inconel which is placed on edge. The lower edge of the band, i.e. its upstream outer portion 12, has been arranged, around the spacer 8, drawn in towards the centre of the spacer 8. When the bundle of fuel rods with the spacer 8 is located in the fuel channel, this leads to the creation of a pocket 13 between the assembly wall 6 and the drawn-in outer portion 12 of the spacer 8. To prevent the film of cooling water flowing along the assembly wall 6 from being stopped in this pocket 13, openings 14 have been provided through the frame of the spacer 8 below each deflection fin 9.

Figures 6 and 7 show substantially the same spacer 8, with the difference that the tip of the deflection fin 9 is joined, by means of a supporting band 15, to the upper edge of the window 10 in order to obtain a somewhat more stable design.

The invention functions in such a way that the elongated deflection fins 9 conduct cooling water from the region at the fuel channel wall 6 inwards towards the centre of the fuel rod bundle, thus improving the cooling thereof. That part of the cooling water which is led into the pocket 13 flows through the openings 14 and contacts the deflection fins 9 which, as mentioned above, conduct the cooling water towards the centre of the spacer.

## Claims

1. Fuel assembly for a boiling nuclear reactor with at least one elongated channel, which is supplied by a coolant intended to traverse the channel, and with a bundle of similarly elongated fuel rods (1) arranged in the channel and retained by a plurality of spacers (8) spaced along the bundle, each one of said spacers (8) comprising a number of cells surrounded by an outer frame which is provided all around with a number of windows (10), **characterized** in that in at least certain of said windows (10) a deflection fin (9) is arranged, fixed to the upstream edge of the respective window (10), and extending in the direction of flow from said edge and being bent towards the centre of the channel such as to divert cooling water, flowing along the inner wall (6) of the channel, in a direction towards the centre of the channel.

2. Fuel assembly according to claim 1, **characterized** in that the frame of the spacer (8) consists of a band, placed on edge, which is bent to fit snugly in the multi-corner channel, that the upstream outer portion (12) of the band up to a middle portion on the band is drawn in towards the centre of the spacer (8) in relation to said middle portion, thus forming a pocket (13) between said outer portion (12) and the channel wall (6), and that said pocket (13) communicates with the interior of the spacer (8) through openings (14) in the band on the upstream side of each respective window (10).

3. Fuel assembly according to claim 1 or 2, **characterized** in that the free end of the fins (9) are joined by means of a supporting band (15) to the edge of the respective window (10) on the downstream side.

## Patentansprüche

1. Brennelement für einen Siedewasserreaktor mit mindestens einem langgestreckten Kanal, in den ein Kühlmittel eingespeist wird, um den Kanal zu durchströmen, und mit einem Bündel aus ähnlich langgestreckten Brennstäben (1), die in dem Kanal angeordnet sind und durch eine Vielzahl von Abstandshaltern (8), die in Abständen voneinander längs des Bündels angeordnet sind, gehalten werden, wobei jeder Abstandshalter (8) eine Vielzahl von Zellen enthält, die von einem äußeren Rahmen umgeben sind, der über seinen gesamten Umfang mit einer Anzahl von Fenstern (10) versehen ist, **dadurch gekennzeichnet**, daß in mindestens einem Teil der genannten Fenster (10) eine Umlenkflosse (9) angeordnet ist, die an dem stromaufwärts gelegenen Rand des betreffenden Fensters (10) fixiert ist und sich in Strömungsrichtung von diesem Rand erstreckt und derart zur Mitte des Kanals hin abgebogen ist, daß Kühlwasser, welches an der inneren Wand längs des Kanals entlangfließt, in Richtung zur Mitte des Kanals umgelenkt wird.

2. Brennelement nach Anspruch 1, **dadurch gekennzeichnet**, daß der Rahmen des Abstandshalters (8) aus einem hochkant aufgestellten Band besteht, welches so gebogen ist, daß es dicht in den vieleckigen Kanal paßt, daß der stromaufwärts gelegene äußere Abschnitt (12) des Bandes bis zu einem mittleren Abschnitt des Bandes nach innen zur Mitte des Abstandshalters (8) relativ zu dem genannten mittleren Abschnitt versetzt ist, wodurch sich eine Tasche (13) zwischen dem genannten äußeren Abschnitt (12) und der Kanalwand (6) bildet, und daß die genannte Tasche (13) mit dem inneren des Abstandshalters (8) durch Öffnungen (14) in dem Band an der stromaufwärts gelegenen Seite jedes entsprechenden Fensters (10) in Verbindung steht.

3. Brennelement nach Anspruch 1 oder 2, **dadurch gekennzeichnet**, daß die freien Enden der Flossen (9) mittels eines Stützbandes (15) mit dem Rand des entsprechenden Fensters (10) an der stromabwärts gelegenen Seite in Verbindung stehen.

## Revendications

1. Assemblage combustible de réacteur nucléaire à eau bouillante, comprenant au moins un canal oblong qui est alimenté en agent de refroidissement destiné à passer dans le canal, et un faisceau de crayons combustibles oblongs similaires (1), disposés dans le canal et retenus par plusieurs entretoises (8) réparties le long du faisceau, chacune de ces entretoises (8) comprenant un certain nombre de mailles entourées d'un cadre extérieur qui est prévu tout autour en ayant un certain nombre de fenêtres (10), caractérisé en ce qu'au moins dans certaines des fenêtres (10) est montée une ailette (9) de déviation, qui est fixée sur le bord amont de la fenêtre (10), et s'étendant dans la direction de l'écoulement depuis le bord, en étant courbée vers le centre du canal de manière à faire dévier de l'eau de refroidissement s'écoulant le long de la paroi (6) intérieure du canal en direction du centre du canal.

2. Assemblage combustible suivant la revendication 1, caractérisé en ce que le cadre de l'entretoise (8) consiste en une bande montée sur champ, qui est courbée de manière à affleurer le canal à plusieurs sommets, en ce que la partie (12) extérieure en amont de la bande allant jusqu'à une partie médiane sur la bande est tirée vers le centre de l'entretoise (8) par rapport à la partie médiane en formant ainsi une poche (13) entre la partie (12) extérieure et la paroi (6) du canal, et en ce que la poche (13) communique avec l'intérieur de l'entretoise (8) par des ouvertures (14) ménagées dans la bande du côté en amont de chaque fenêtre (10).

3. Assemblage combustible suivant la revendication 1 ou 2, caractérisé en ce que les extrémités libres des ailettes (9) sont réunies au moyen d'une bande (15) de supportage au bord de la fenêtre (10) respective du côté en aval.
